# EUROPEAN PATENT APPLICATION

(11) **EP 1 871 121 A2**
(43) Date of publication of application: **26.12.2007**
(21) Application number: 07011988.8
(22) Date of filing: 19.06.2007
(51) Int. Cl.: H04Q 7/22, H04L 12/56

(54) **Method of constructing packets for MAC layer in a wireless communications system and related apparatus**

(30) Priority: 19.06.2006 US 805095 P
(71) Applicant: Innovative Sonic Limited, Tortola (VG)
(72) Inventor: Kuo, Richard Lee-Chee, Taipei City (TW); Tseng, Li-Chih, Taipei City (TW)
(74) Representative: Hager, Thomas Johannes

(57) **Abstract**

In order to transmit available data of high priority services as soon as possible, the present invention provides a method of constructing packets in a wireless communications system. The wireless communications system has a medium access control layer. The method includes the following steps. A plurality of group packet data units, called PDUs hereinafter, corresponding to a logic channel is concatenated in a transmission time interval, called TTI hereinafter (302). The concatenated plurality of group PDUs is appended to a transmission PDU in the TTI (304). A plurality of data description signals with respect to the plurality of group PDUs is added into the transmission PDU during the TTI, where the plural data description signals are fully or partially the same (306).

## Description

This application claims the benefit of U.S. Provisional Application No. 60/805,095, filed on JUN 19,2006 and entitled "METHOD AND APPARATUS FOR IMPROVING THE PDU FORMAT IN HSUPA", the contents of which are incorporated herein by reference.

The present invention relates to a method of constructing a packet for a medium access control layer in a wireless communications system and related communications device according to the pre-characterizing clauses of claims 1 and 12.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

According to a medium access control (MAC) specification 3GPP TS 25.321 V7.0.0 defined by the 3rd Generation Partnership Project, there are two new MAC sub-layers, MAC-es and MAC-e, introduced in the HSUPA. The MAC-es is a peer-to-peer layer between a user equipment (UE) and a serving radio network controller (SRNC), whereas MAC-e is a peer-to-peer layer between the UE and a Node-B. Furthermore, a MAC-e/es entity is added in the UE and includes hybrid automatic request (HARQ) entity, multiplexing and TSN setting and enhanced transport format combination (E-TFC) selection entities for performing HARQ retransmissions, scheduling, MAC-e packet multiplexing, E-TFC selection and so on. Accordingly, a MAC-e is added in the Node-B and is responsible for the HARQ retransmissions, scheduling and MAC-e packet de-multiplexing. The MAC-es is added in the SRNC and handles packet re-ordering and combination of packet data from different Node-Bs during a soft handover.

The MAC-es layer is arranged above the MAC-e layer and below a MAC-d layer. MAC-d packet data units (MAC-d PDUs) from different logic channels are received and concatenated into MAC-es PDUs in the MAC-es layer. The MAC-e layer concatenates MAC-es PDUs into MAC-e PDUs, and thereby the MAC-e PDUs are transmitted as transport block sets (TBSs) in corresponding transport channels. According to Figure 9.1.5.1 in the foregoing MAC specification, the MAC-d PDUs included in a MAC-es PDU all comes from the same logic channel. That is, each MAC-es PDU corresponds to one of the logic channels. Additionally, a transmission sequence number (TSN) is included in each packet header of the MAC-es PDU from different logic channels. The TSNs are given consecutive numbers via a CURRENT_TSN parameter executed by a TSN setting process, and the TSN numbers are between 0-63. With TSN, the multiplexing and TSN setting entity in the UE is allowed to concatenate MAC-es PDUs in timing order and the Node-B and SRNC can accordingly de-multiplex and reorder the received PDUs. Furthermore, according to Figure 9.1.5.2a, the MAC-es PDUs coming from different logic channels are placed into a MAC-e PDU in order, and besides, the MAC-e PDU has data description indicators (DDIs) and a number of MAC-d PDUs (called N hereinafter) each corresponding to one of the MAC-es PDUs in the header. Each DDI indicates the logic channel, MAC-d flow, and size of the MAC-d PDUs concatenated into the associated MAC-es PDU. Thus, the receiving terminal can de-multiplex the MAC-es PDUs in the MAC-e PDU to the accurate logic channel. Every N following the associated DDI is used for indicating the number of consecutive MAC-d PDUs corresponding to the same DDI. The length of the N is 6 bits. So the maximum value ofN is 64.

In the HSUPA system according to the prior art, a MAC-e PDU includes as least one MAC-es PDU and the MAC-es PDU includes at least one MAC-d PDU. However, the MAC-es PDU is only allowed to receive the MAC-d PDUs from one logic channel, which indicates that each MAC-es PDU in the MAC-e PDU corresponds to different logic channels. It is more important that the foregoing MAC specification specifies the above-mentioned steps must be finished in a transmission time interval (TTI). As a result, there is one and only one MAC-es PDU transmitted per logical per TTI, which implies that each logic channel can transmit 64 MAC-d PDUs at most per TTI irrespective of logic channel priorities. In such a situation, the service data of the logic channel with high priority may not be transmitted as soon as possible, lowering quality of service (QoS) of the higher priority services.

This in mind, the present invention aims at providing a method of constructing packets and related communications device for a MAC layer in a wireless communications system that can improve an existing packet format to allow more than one MAC-es PDU transmitted per logic channel per TTI.

This is achieved by a method of constructing packets and related communications device for a MAC layer in a wireless communications system according to **claims 1 and 12**. The dependent claims pertain to corresponding further developments and improvements.

As will be seen more clearly from the detailed description following below, the claimed method of constructing packets and related communications device for a MAC layer in a wireless communications system includes concatenating a plurality of group packet data units (PDUs) corresponding to a logic channel in a transmission time interval (TTI); appending the concatenated plurality of group PDUs to a transmission PDU in the TTI; adding a plurality of data description signals with respect to the plurality of group PDUs into the transmission PDU in the TTI, where the plurality of data description signals includes fully or partially the same data contents.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 is a flowchart of a process according to an embodiment of the present invention.

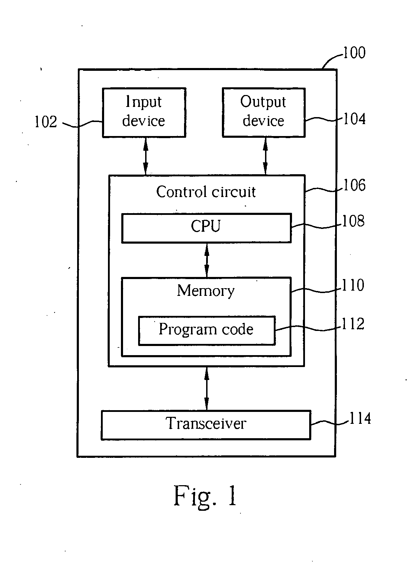

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

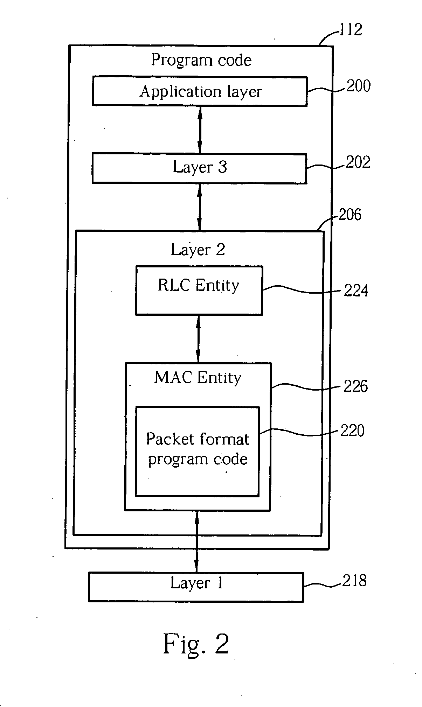

Please continue to refer to Fig. 2, which is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. The RRC entity 224 exchanges signals and data with the MAC entity 226 through logic channels, whereas the MAC entity 226 communicates with the Layer 1 218 through transport channels. The MAC entity 226 can perform channel mapping, multiplexing, transport format selection, or random access control according to Layer 3 202 signaling. Furthermore, the MAC entity 226 organizes MAC-d packet data units (PDUs) coming from the logic channels of the RLC entity 224 into MAC-es PDUs and further organizes the MAC-es PDUs into MAC-e PDUs. The MAC-e PDUs are transmitted through corresponding transport channels.

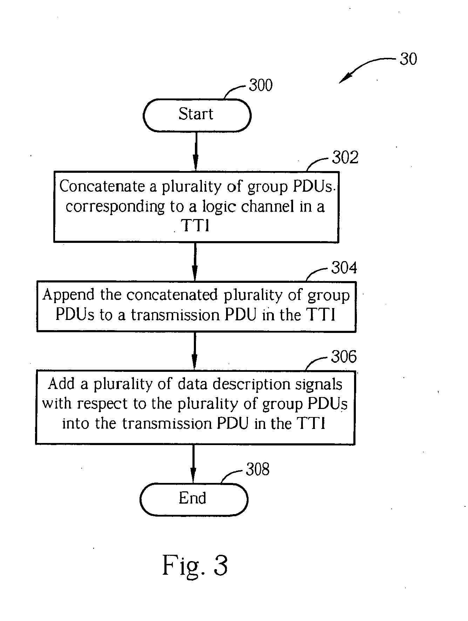

The communications device 100 is preferably applied to the HSUPA system of the third generation telecommunications system. A packet format program code 220 is provided in the embodiment of the present invention to construct the packet appropriately in order to improve transmission efficiency of high priority services. Please refer to Fig. 3, which is a flowchart of a process 30 according to an embodiment of the present invention. The process 30 includes the following steps:
Step 300: Start.
Step 302: Concatenate a plurality of group PDUs corresponding to a logic channel in a transmission time interval (TTI).
Step 304: Append the concatenated plurality of group PDUs to a transmission PDU in the TTI.
Step 306: Add a plurality of data description signals with respect to the plurality of group PDUs into the transmission PDU in the TTI.
Step 308: End.

According to the process 30, in one TTI, at least one PDU from the upper layer are concatenated into each of the group PDUs in advance. And then, the group PDUs are concatenated and appended to the transmission PDU as a packet set. The data description signals added in the transmission PDU includes fully or partially the same data contents indicating a size of the PDUs from the upper layer and the logic channel which the PDUs from the upper layer use.

The process 30 can be compiled into the packet format program code 220 for the HSUPA application of the communications device 100. The PDUs from an upper layer, group PDUs and transmission PDUs are set to be the MAC-d PDUs, MAC-es PDUs and MAC-e PDUs, respectively. Thus, the MAC-d PDUs are received from the logic channels and received in order according to priorities of the logic channel in the process 30. For a logic channel, the MAC-d PDUs are allowed to form multiple MAC-es PDUs in a TTI. Besides, for packet reordering in receiving terminal, each packet header of the MAC-es PDUs is added with transmission sequence numbers having the same number or consecutive numbers. For example, assuming that there are three MAC-es PDUs formed for a logic channel, the TSN numbers are set to be 1, 2, 3 or 1, 1, 1 in the associated packet headers. Only adding a TSN into the packet header of the first one of the MAC-es PDUs is an alternative. The TSNs with respect to the rest of the MAC-es PDUs are omitted and different TSN numbers are used for the MAC-es PDU groups from different logic channels. Thus, fewer bits are required for TSN signaling transmission per TTI in the embodiment of the present invention. The TSN numbers can be given through the above-mentioned TSN setting process. In the MAC-e layer, the MAC-es PDUs are concatenated and then appended to a MAC-e PDU in order according to the TSN numbers. There are data description indicators (DDIs) included in the packet header of the MAC-e PDU and each DDI corresponds to each of the MAC-es PDUs. The data contents of the DDIs indicate logic channel identification numbers associated with the MAC-d PDUs in each MAC-es PDU and the size of the MAC-d PDUs. Thus, as receiving and de-multiplexing the MAC-e PDU, with the DDIs, the receiving terminal can exactly know which logic channel the MAC-es PDUs inside should be transferred to together, and the size of each MAC-es PDU. Therefore, through the process 30 of the embodiment, multiple MAC-es PDUs with respect to the same logic channel are allowed in one MAC-e PDU. For each TTI, a MAC-e PDU can include multiple MAC-es PDUs with respect to fully or partially the same DDIs. Multiple TSNs corresponding to the same logic channel are allowed to transmit in a TTI.

Please note that the process 30 is applied to each of any logic channels providing service data to transmit in a TTI until a loading size of the MAC-e PDU is reached. In general, the MAC entity transmits the service data according to corresponding logic channel priorities, and the service data with higher priority is sent earlier. That is, if the MAC-e PDU has been fully loaded with the MAC-es PDUs with high priority in this TTI, the MAC-es PDUs with lower priority may wait to transmit until next TTI or later. The service data with higher priority are commonly real time services, such as video broadcasting or voice phone (VoIP) so that the transmission timing dominates the QoS. According to the process 30, multiple MAC-es PDUs are allowed to transmit the service data from a high priority logic channel per TTI. Therefore, the service data with high priority can be transmitted as soon as possible, providing high QoS.

In conclusion, according to the prior art, there is one and only one MAC-es PDU included in one MAC-e PDU per logic channel per TTI. As for the embodiment of the present invention, there are multiple MAC-es PDUs allowed to include in one MAC-e PDU per logic channel per TTI. Besides, with appropriate TSN and DDI settings, the receiving terminal can operate with such a packet format and thereby multiplex the received PDUs to logic channels accurately. Therefore, through the present invention, the service data with high priority can be transmitted as soon as possible to meet the users' expectation.

## Claims

1. A method of constructing a packet for a wireless communications system, the wireless communications system comprising a medium access control layer, also called a MAC layer, the method comprising:
concatenating a plurality of group packet data units, called PDUs hereinafter, corresponding to a logic channel in a transmission time interval, called TTI hereinafter; (302)
appending the concatenated plurality of group PDUs to a transmission PDU in the TTI (304); and
adding a plurality of data description signals with respect to the plurality of group PDUs into the transmission PDU in the TTI, the plurality of data description signals comprising fully or partially the same data contents (306).

2. The method of claim 1 **characterized in that** each of the group PDUs comprises a plurality of PDUs from an upper layer and thereby the data contents in the plurality of data description signals indicate a size of the PDUs from the upper layer and a logic channel used by the PDUs from the upper layer.

3. The method of claim 1 **characterized in that** the plurality of group PDUs is a plurality of MAC-es PDUs.

4. The method of claim 1, **characterized in that** the transmission PDU is a MAC-e PDU.

5. The method of claim 1, **characterized in that** the plurality of data description signals is a plurality of data description indicators.

6. The method of claim 1, **characterized in that** the method further comprises adding a transmission sequence number, called TSN hereinafter, into each of the group PDUs.

7. The method of claim 6, **characterized in that** the TSNs corresponding to the plurality of group PDUs have the same number.

8. The method of claim 6, **characterized in that** the TSNs corresponding to the plurality of group PDUs have consecutive numbers.

9. The method of claim 1, **characterized in that** the method further comprises only adding a transmission sequence number into the first group PDU of the plurality of group PDUs.

10. The method of claim 1, **characterized in that** the data contents in the plurality of data description signals indicate a channel identification number with respect to the logic channel.

11. The method of claim 1, **characterized in that** the wireless communications system is a high speed uplink package access system of a third generation wireless communications system.

12. A communications device (100) for appropriately constructing a packet for a wireless communications system to improve transmission efficiency for high priority services, the wireless communications system comprising a medium access control layer, also called a MAC layer, the communications device (100) comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code;
**characterized by** program code (112) comprising:
concatenating a plurality of group packet data units, called PDUs hereinafter, corresponding to a logic channel in a transmission time interval, called TTI hereinafter ; (302)
appending the concatenated plurality of group PDUs to a transmission PDU in the TTI (304); and
adding a plurality of data description signals with respect to the plurality of group PDUs into the transmission PDU in the TTI, the plurality of data description signals comprising fully or partially the same data contents (306).

13. The communications device of claim 12, **characterized in that** each of the group PDUs comprises a plurality of PDUs from an upper layer and thereby the data contents in the plurality of data description signals indicate a size of the PDUs from the upper layer and a logic channel used by the PDUs from the upper layer.

14. The communications device of claim 12, **characterized in that** the plurality of group PDUs is a plurality of MAC-es PDUs.

15. The communications device of claim 12, **characterized in that** the transmission PDU is a MAC-e PDU.

16. The communications device of claim 12, **characterized in that** the plurality of data description signals is a plurality of data description indicators, also called DDIs.

17. The communications device of claim 12, **characterized in that** the program code (112) further comprises adding a transmission sequence number, called TSN hereinafter, into each of the group PDUs.

18. The communications device of claim 17, **characterized in that** the TSNs corresponding to the plurality of group PDUs have the same number.

19. The communications device of claim 17, **characterized in that** the TSNs corresponding to the plurality of group PDUs have consecutive numbers.

20. The communications device of claim 12, **characterized in that** the program code (112) further comprises only adding a transmission sequence number into the first group PDU of the plurality of group PDUs.

21. The communications device of claim 12, **characterized in that** the data contents in the plurality of data description signals indicate a channel identification number with respect to the logic channel.

22. The communications device of claim 12, **characterized in that** the wireless communications system is a high speed uplink package access system of a third generation wireless communications system.
